# DEMANDE DE BREVET EUROPEEN

(11) **EP 2 339 820 A1**
(43) Date de publication de la demande: **29.06.2011**
(21) Numéro de dépôt: 09306317.0
(22) Date de dépôt: 23.12.2009
(51) Int. Cl.: H04M 3/436, H04M 3/38

(54) **Procédé de filtrage et de routage d'appels téléphoniques, notamment d'appels à destination de numéros surtaxés**

(71) Demandeur: Econoteam, 75008 Paris (FR)
(72) Inventeur: Gillard, Gaëtan, 06220 Vallauris Golfe Juan (FR); Blay, Yann, 75012 Paris (FR)
(74) Mandataire: Dupuis-Latour, Dominique

(57) **Abrégé**

Un utilisateur (14, 16, 18) envoie à une unité de filtrage et de routage (10) une requête d'appel d'un numéro cible. Cette requête comprend un appel téléphonique émis par un numéro d'appelant (NAP) vers un numéro d'appel spécifique associé à un canal entrant (CE) de l'unité de filtrage et de routage et différent du numéro cible. L'unité de filtrage et de routage recherche le numéro d'appelant dans une base de données (20) d'utilisateurs habilités et rejette la requête d'appel si le numéro d'appelant n'est pas répertorié dans la base de données. Si le numéro d'appelant est répertorié dans la base de données, l'unité de filtrage et de routage lit dans la base de données un profil utilisateur associé au numéro d'appelant, compose de manière conditionnelle le numéro cible sur un canal sortant (CS) en fonction du profil utilisateur, et met en relation le canal entrant et le canal sortant, de manière à établir une communication bidirectionnelle entre utilisateur et numéro cible.

## Description

L'invention concerne la gestion des appels téléphoniques, notamment des appels à destination de numéros surtaxés.

Le point de départ de l'invention réside dans la demande de nombreuses entreprises de limiter le coût des appels téléphoniques passés par leurs collaborateurs, qui génèrent des dépenses importantes en particulier dans le cas d'appels vers des numéros surtaxés.

Les numéros surtaxés peuvent aussi bien concerner des destinataires utiles (par exemple des numéros d'assistance technique, de loueurs de voitures, etc.) que des destinataires n'ayant aucun rapport avec l'activité de l'entreprise (météo, horoscope, tiercé, etc.).

Un cas analogue concerne les numéros mnémoniques surtaxés propres à une entreprise tels que les numéros abrégés à quatre chiffres du type "xx xx", par exemple pour l'appel à des services généraux d'assistance informatique interne. Souvent, par facilité, les employés de cette entreprise préfèrent téléphoner au numéro surtaxé mnémonique plutôt qu'au "numéro noir" qui est communiqué par la société (numéro à tarification locale, non surtaxé, doublant le numéro surtaxé), ce qui donne lieu à des facturations internes complexes, engendrant ainsi un surcoût inutile.

Pour discriminer ces numéros surtaxés, il est possible de mettre en oeuvre des règles sélectives de filtrage au niveau de l'autocommutateur (PABX). Cette technique est toutefois limitée aux terminaux fixes reliés au PABX, donc situés sur un site précis, et leur efficacité est limitée en termes de taille des tables répertoriant les numéros interdits, notamment s'il est nécessaire d'appliquer des règles de filtrage différentes en fonction des utilisateurs ou de certaines catégories d'utilisateurs, ce qui multiplie d'autant les moyens logiciels et matériels nécessaires. De plus, l'implantation des règles de filtrage dans un PABX constitue une solution relativement complexe et lourde à gérer, notamment pour les mises à jour, lorsqu'il est nécessaire d'intervenir sur plusieurs autocommutateurs situés sur des sites différents de l'entreprise, etc.

Enfin, en tout état de cause, cette technique n'est pas applicable aux appels passés par les collaborateurs depuis des téléphones mobiles.

Une interdiction pure et simple de tous les numéros surtaxés (en France les numéros de type "08 xx xx xx xx", ou les numéros mnémoniques à quatre chiffres "xx xx") n'est pas non plus une solution satisfaisante, car elle exclut les numéros de destinataires utiles à l'entreprise ou à certaines catégories de collaborateurs : assistance technique, loueurs de voitures, etc.

Certes, pour ces destinataires il existe souvent un numéro à tarification locale, non surtaxé, dit "numéro noir" doublant le numéro surtaxé. Mais très souvent, s'il a accès aux numéros surtaxés, l'utilisateur préférera utiliser un numéro simple à retenir (numéro mnémonique à quatre chiffres par exemple) plutôt que le numéro noir associé, entraînant de ce fait un surcoût inutile.

L'idée de base de l'invention consiste, pour résoudre ces problèmes, à faire en sorte que chaque utilisateur souhaitant téléphoner à un numéro surtaxé (ci après "numéro cible"), passe obligatoirement par une unité de filtrage et de routage, accessible par un numéro unique.

Cette unité, qui fait office de passerelle entre l'utilisateur et le numéro cible, possède une base de données de tous les utilisateurs autorisés (connus par leur numéro d'appelant) qui permettra d'accorder ou non l'accès au numéro demandé, en fonction du profil et des autorisations associées à l'utilisateur.

Si l'utilisateur est autorisé, l'unité de filtrage et de routage met automatiquement l'utilisateur en relation avec le numéro cible demandé, en composant le numéro surtaxé demandé ou, s'il existe, le "numéro noir" associé à ce numéro surtaxé.

En variante ou en complément, il est possible d'autoriser aussi l'accès à des terminaux dont le numéro n'est pas connu de la base de données, ou dont le numéro n'est pas communiqué à la passerelle ("numéro masqué"). L'accès sera alors conditionné au passage par une page d'identification avec demande de code d'accès. Cette possibilité pourra être utile également à une personne souhaitant accéder depuis l'étranger à un numéro surtaxé français (assistance technique, etc.), mais qui ne peut obtenir ce numéro à partir d'un terminal connecté à un réseau étranger.

En d'autres termes, une passerelle est ouverte pour tous les terminaux d'appel de l'entreprise ―fixes aussi bien que mobiles ―, qui devront impérativement transiter par cette passerelle pour établir un contact avec un numéro cible correspondant à un numéro surtaxé.

Plus précisément, le procédé de l'invention est caractérisé par les étapes successives suivantes :
a) par un utilisateur, envoi à une unité de filtrage et de routage d'une requête d'appel d'un numéro cible, cette requête comprenant un appel téléphonique émis par un numéro d'appelant vers un numéro d'appel spécifique associé à un canal entrant de l'unité de filtrage et de routage et différent du numéro cible ;
b) par l'unité de filtrage et de routage, recherche du numéro d'appelant dans une base de données d'utilisateurs habilités ;
c) si le numéro d'appelant n'est pas répertorié dans la base de données, rejet de la requête d'appel ;
d) si le numéro d'appelant est répertorié dans la base de données :
   d1) lecture d'un profil utilisateur associé au numéro d'appelant dans la base de données,
   d2) composition conditionnelle du numéro cible sur un canal sortant de l'unité de filtrage et de routage, en fonction du profil utilisateur, et
   d3) mise en relation du canal entrant et du canal sortant, de manière à établir une communication bidirectionnelle entre utilisateur et numéro cible.

Selon diverses formes de mise en oeuvre subsidiaires avantageuses :
- le procédé comprend en outre une étape e) d'enregistrement dans la base de données du numéro d'appelant et d'informations d'horodatage de l'appel ;
- le procédé comprend en outre une étape f) de fermeture inconditionnelle de la communication sur les canaux entrant et sortant à réalisation d'au moins une condition parmi : expiration d'un laps de temps prédéterminé ; temps maximum journalier de communication atteint ; et/ou nombre maximum journalier d'appels autorisé atteint ;
- de fermeture inconditionnelle de la communication sur les canaux entrant et sortant à l'expiration d'un laps de temps prédéterminé ;
- le profil utilisateur est un profil défini parmi une pluralité de types d'utilisateur correspondant chacun à des modes différents de composition du numéro cible à l'étape d2), notamment :
   - un profil d'utilisateur à composition directe, pour lequel la composition du numéro cible à l'étape d2) est une composition directe, par l'unité de filtrage et de routage, d'un numéro unique préenregistré dans la base de données, et/ou
   - un profil d'utilisateur à composition automatique, pour lequel la composition du numéro cible à l'étape d2) est une composition indirecte, par l'unité de filtrage et de routage, d'un numéro sélectionné à distance par l'utilisateur via le canal entrant parmi une pluralité de numéros préenregistrés dans la base de données, et/ou
   - un profil d'utilisateur à composition manuelle, pour lequel la composition du numéro cible à l'étape d2) est une composition indirecte, par l'unité de filtrage et de routage, d'un numéro composé à distance par l'utilisateur via le canal entrant, le procédé comprenant en outre une étape de vérification du numéro ainsi composé parmi une liste de numéros cibles autorisés, répertoriés dans la base de données ;
- le procédé comprend en outre l'émission en retour, par l'unité de filtrage et de routage, de messages audio vers l'utilisateur via le canal entrant, le contenu de ces messages audio étant fonction de la reconnaissance ou non du numéro d'appel dans la base de données et du profil utilisateur contenu dans celle-ci ;
- le profil utilisateur contenu dans la base de données est un profil variable en fonction du jour et de l'heure de l'appel ;
- l'étape b) de recherche comprend une étape d'identification conditionnelle de l'appelant par demande de code d'accès, en cas de numéro d'appelant inconnu de la base de données ou de numéro masqué non transmis à l'unité de filtrage et de routage.

On va maintenant décrire un exemple de mise en oeuvre de l'invention, en référence aux dessins annexés où les mêmes références numériques désignent d'une figure à l'autre des éléments identiques ou fonctionnellement semblables.

La Figure 1 illustre, de façon générale, les différents éléments impliqués dans la mise en oeuvre de l'invention.

Les Figures 2 à 4 sont des organigrammes explicitant les étapes successives de mise en oeuvre du procédé de l'invention, avec les actions entreprises en fonction des différentes situations identifiées au cours du déroulement du processus.

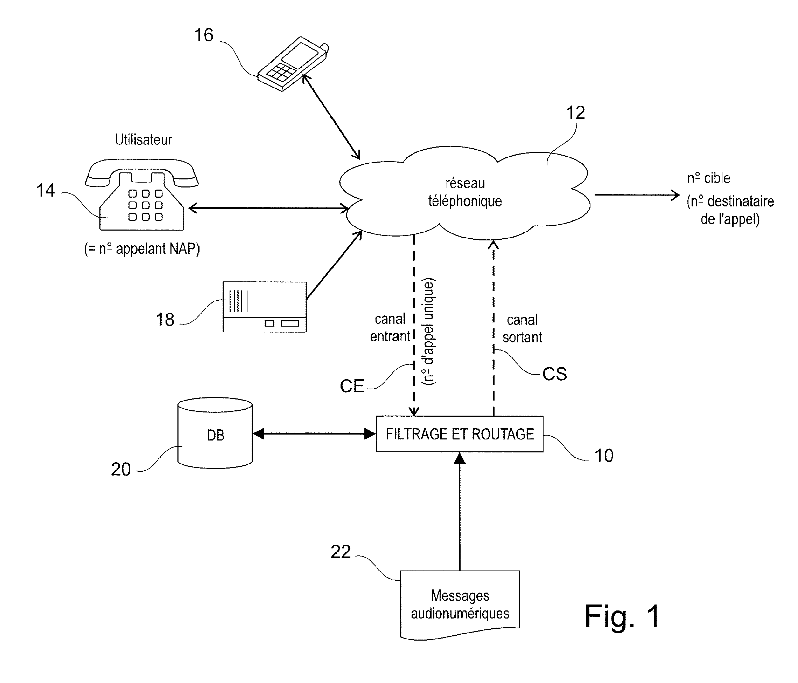

Sur la Figure 1, la référence 10 désigne une unité de filtrage et de routage d'appels téléphoniques, constituant une passerelle qui devra être impérativement utilisée par tous les utilisateurs qui souhaitent prendre contact avec un destinataire (identifié par son "numéro cible"), notamment un destinataire qui est normalement accessible par l'intermédiaire d'un numéro surtaxé.

L'unité de filtrage et de routage 10 est installée en un lieu unique, par exemple le site informatique de l'entreprise auquel sont rattachés les différents utilisateurs potentiels. L'unité 10 est accessible depuis l'extérieur sur un canal entrant CE via le réseau téléphonique 12, par l'intermédiaire d'un unique numéro composé par l'utilisateur distant.

L'utilisateur distant peut accéder au site depuis n'importe quel poste téléphonique fixe 14 de l'entreprise, sur lequel il compose le numéro (unique) d'appel de l'unité de filtrage et de routage 10, ou encore depuis un téléphone mobile 1 sur lequel il compose ce même numéro. L'appel peut être également généré automatiquement par un boîtier 18, par exemple un boîtier d'alarme ou d'installation de télésurveillance programmé pour composer à intervalles régulier ou en cas de survenue d'un incident le numéro d'accès à l'unité 10.

Dans tous les cas, quel que soit l'utilisateur et le mode d'appel, l'accès à l'unité 10 via le canal entrant CE implique la transmission à l'unité du numéro d'appelant NAP, qui servira à l'unité 10 de moyen d'identification et de discrimination de l'utilisateur.

L'unité de filtrage et de routage 10 est également reliée au réseau téléphonique via un canal sortant CS, permettant notamment l'établissement conditionnel de la communication vers le numéro cible, destinataire de l'appel demandé par l'utilisateur.

L'unité de filtrage et de routage 10 est interfacée avec une base de données (DB) 20, par exemple fonctionnant sous LDAP *(Lightweigth Directory Access Protocol).*

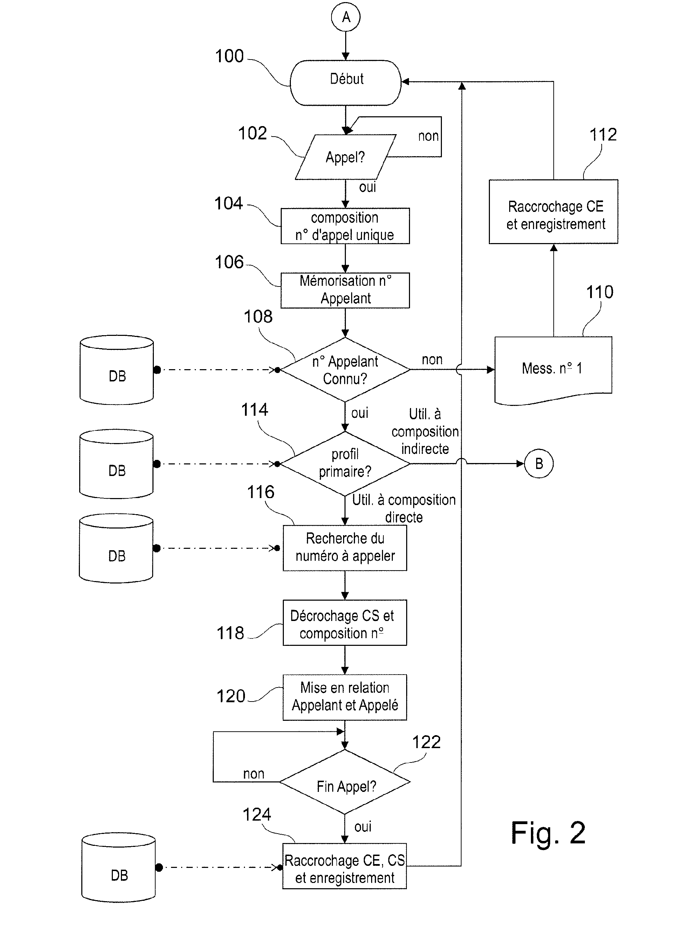

Cette base de données 20 contient en particulier la liste de tous les utilisateurs autorisés (identifiés chacun par leur numéro d'appelant NAP) avec pour chacun un "profil" indiquant le mode d'accès aux numéros cibles autorisés, ainsi que les numéros autorisés ou interdits. Cette notion de "profil utilisateur" sera explicitée plus bas en référence aux Figures 2 à 4 détaillant les différentes actions entreprises par l'unité 10 en fonction de tel ou tel profil.

La base de données 20 permet également l'enregistrement d'un journal contenant l'historique des différents accès ou tentatives d'accès effectués par appel de l'unité 10, avec pour chaque rubrique un horodatage et l'indication des actions exécutées (ou non). Il est ainsi possible d'assurer un suivi complet et permanent de l'utilisation de l'unité 10.

L'unité 10 est également associée à un générateur de messages audionumériques 22 permettant d'informer l'utilisateur ayant accédé à l'unité 10 des différentes actions décidées en retour par cette unité, et à le guider éventuellement dans les différentes opérations qu'il lui est demandé d'exécuter.

Les divers messages produits par le générateur 22 seront décrits plus bas en référence aux Figures 2 à 4, dans leur contexte d'utilisation. On notera incidemment que les messages peuvent être personnalisés en fonction de l'utilisateur, ou d'un groupe d'utilisateurs précis : par exemple les appels vers une compagnie aérienne pourront être autorisés pour toute l'entreprise, mais le message pourra être spécifique dans le cas de l'agence de voyages au sein de cette entreprise.

On va maintenant expliquer en détail, en référence aux Figures 2 à 4, les différentes actions entreprises par l'unité 10 en fonction du profil utilisateur identifié.

Initialement (Figure 2), l'unité de filtrage et de routage 10 est en attente d'un appel sur le canal entrant CE en provenance d'un utilisateur (blocs 100, 102). L'appel par un utilisateur (bloc 104) consiste pour celui-ci à appeler l'unité 10 en composant un numéro de téléphone unique correspondant au canal entrant CE (bloc 104).

Sur réception de cet appel, l'unité 10 mémorise le numéro d'appelant NAP (bloc 106) et recherche dans la base de données DB si ce numéro d'appelant correspond ou non à un utilisateur connu (bloc 108).

Si l'utilisateur est inconnu, l'unité 10 émet en retour un message audio (bloc 110) indiquant à l'appelant qu'il ne dispose pas de droit d'accès via l'unité 10, procède au raccrochage de la ligne sur le canal entrant CE et inscrit un enregistrement dans la base de données avec le numéro appelant (inconnu), la date et l'heure de l'appel (bloc 112).

Si, en revanche, l'utilisateur est connu de la base de données, l'unité 10 examine le profil associé à cet utilisateur (bloc 114).

L'utilisateur est tout d'abord défini par un "profil primaire" identifiant le mode d'accès correspondant, qui est soit un accès au numéro cible par composition directe et automatique de cet (unique) numéro cible, soit une composition indirecte, le numéro cible étant dans ce cas composé par l'utilisateur lui-même ou choisi parmi une liste de plusieurs numéros cibles possibles.

Si le profil correspond à un accès par composition directe (ce qui est typiquement le cas d'un boîtier d'alarme appelant toujours le même numéro cible, à savoir le numéro d'une centrale de télésurveillance), l'unité 10 recherche dans la base de données le numéro à appeler (bloc 116), et compose celui-ci après avoir ouvert le canal sortant CS (bloc 118). Une fois le numéro cible obtenu, l'unité 10 opère la mise en relation bidirectionnelle de l'utilisateur avec ce numéro cible (mise en relation du canal entrant CE avec le canal sortant CS), de manière à laisser s'exécuter l'échange entre appelant et appelé (bloc 120).

Cette situation se poursuit (bloc 122) jusqu'à la fin de l'appel, consécutive à un raccrochage par l'appelant ou par l'appelé. L'unité ferme alors les canaux entrant et sortant CE et CS et enregistre dans la base de données (bloc 124) les informations de journal (numéro appelant, date et heure, numéro appelé).

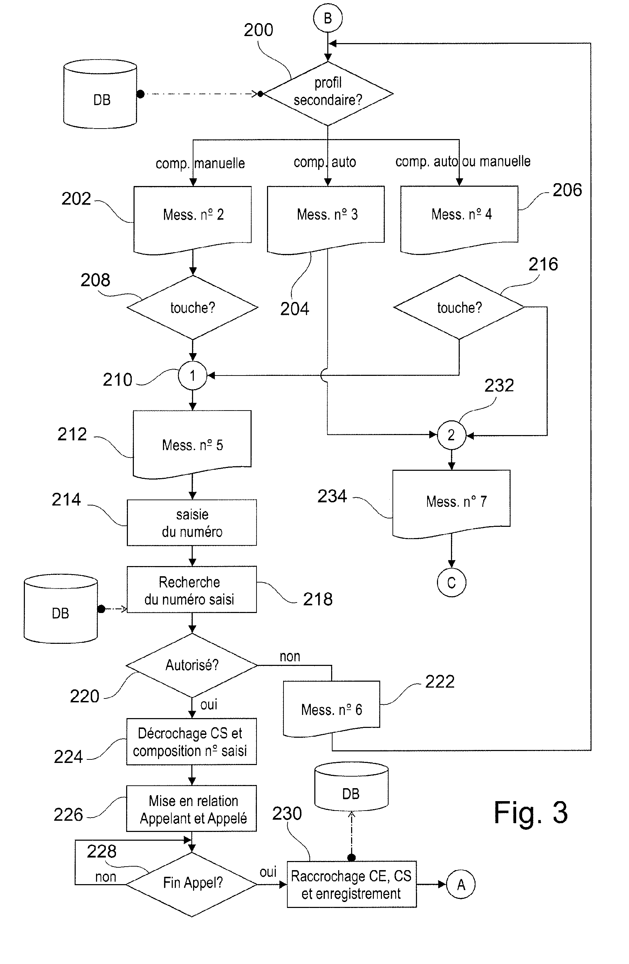

Si, à l'étape 114, le profil primaire de l'utilisateur correspond à un accès par composition indirecte, la séquence des opérations est celle illustrée Figure 3.

L'unité 10 examine dans ce cas le profil secondaire de l'utilisateur (bloc 200). Ce profil secondaire peut définir trois types d'utilisateurs, selon le mode de composition :
- "composition manuelle" : le numéro cible sera composé par l'utilisateur lui-même, qui tapera sur son clavier chaque chiffre de ce numéro ;
- "composition automatique" : l'utilisateur sélectionnera un numéro cible parmi plusieurs mémorisés dans la base de données, cette sélection étant opérée par navigation dans un menu ou par appui sur une touche particulière d'accès rapide, associée à ce numéro ;
- "composition automatique ou manuelle au choix de l'utilisateur" : une action supplémentaire sera dans ce cas nécessaire pour indiquer à l'unité 10 le mode particulier de composition, automatique ou manuel. En fonction du profil secondaire identifié à l'étape 200, l'utilisateur est guidé par un message audio correspondant (blocs 202, 204, 206), lui indiquant l'action que l'unité 10 lui demande d'exécuter.

Ainsi, dans le cas d'un profil secondaire de type "composition manuelle", il est demandé à l'utilisateur d'appuyer sur une touche prédéterminée (bloc 208), notamment un chiffre libre tel que le "1" (bloc 210) pour confirmer et accéder à la composition manuelle. Un nouveau message audio (bloc 212) l'invite alors à saisir le numéro cible sur le clavier de son téléphone (bloc 214).

La même séquence d'opérations est suivie pour un profil secondaire de type "composition automatique ou manuelle", après que l'utilisateur ait choisi, entre les deux types de composition, la composition automatique par appui sur la touche spécifique (bloc 216), dans cet exemple la touche "1".

Dans l'un ou l'autre cas l'unité 10 vérifie si le numéro cible saisi est ou non un numéro autorisé répertorié dans la base de données (blocs 218, 220). Dans la négative, un message de refus est émis (bloc 222) et le processus retourne à l'étape 200.

Si le numéro cible saisi est autorisé, ce numéro est composé sur le canal sortant CS (bloc 224), puis l'utilisateur et le numéro cible sont mis en relation directe (bloc 226) jusqu'à ce qu'une fin d'appel soit détectée (bloc 228), auquel cas l'unité ferme les canaux entrant et sortant CE et CS et enregistre dans la base de données les informations de journal (bloc 230). Dans le cas d'un profil secondaire de type "composition automatique", ou de type "composition automatique ou manuelle" après que l'utilisateur ait appuyé sur une touche de sélection appropriée (bloc 216), par exemple la touche "2" (bloc 232), un message audio spécifique est délivré (bloc 234) indiquant à l'utilisateur la manière de procéder.

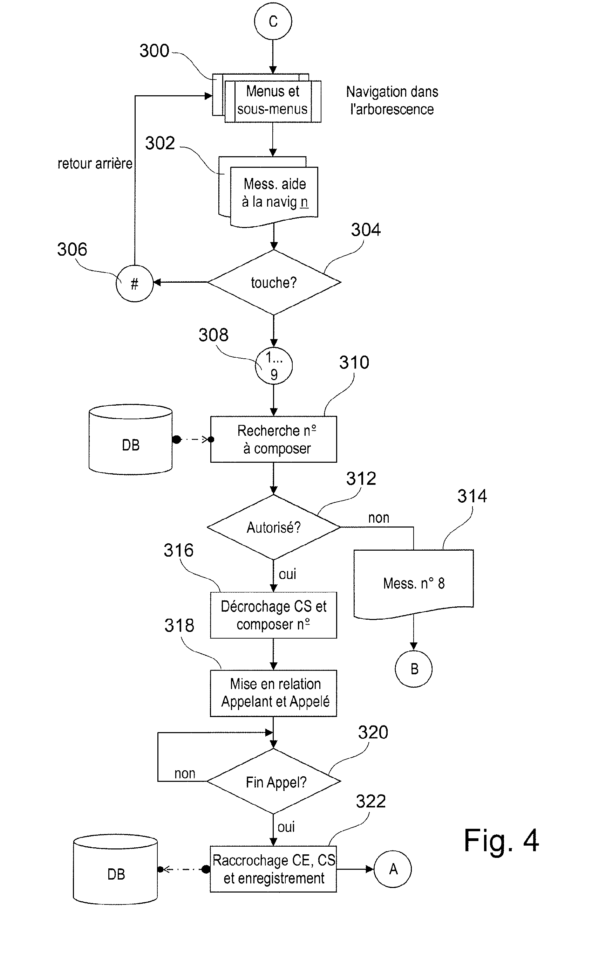

La séquence des opérations est alors celle illustrée Figure 4.

L'utilisateur, après y avoir été invité par le message audio, navigue dans une arborescence (bloc 300) où il peut se déplacer en tapant sur certaines touches de la même manière que pour un serveur vocal, la navigation étant aidée par des messages appropriés (bloc 302). Chaque touche composée est analysée par l'unité 10 (bloc 304), l'utilisateur pouvant à tout moment revenir en arrière dans l'arborescence en composant la touche "#" (bloc 306).

Si la touche indique l'accès à un numéro de téléphone (bloc 308), l'unité 10 recherche alors dans la base de données DB le numéro cible correspondant (bloc 310) et vérifie s'il s'agit ou non d'un numéro autorisé (bloc 312). Dans la négative, un message audio correspondant est délivré en retour (bloc 314) et le processus retourne à l'étape 200.

Si le numéro cible est autorisé, ce numéro est composé sur le canal sortant CS (bloc 316), puis l'utilisateur et le numéro cible sont mis en relation directe (bloc 318) jusqu'à ce qu'une fin d'appel soit détectée (bloc 320), auquel cas l'unité ferme les canaux entrant et sortant CE et CS et enregistre dans la base de données les informations de journal (bloc 322).

On notera que le profil secondaire de l'utilisateur, avec notamment les numéros cibles autorisés ou non, peut être un profil variable en fonction de l'heure et du jour d'appel. Ainsi, notamment à l'étape 312, le contrôle de l'autorisation peut impliquer un contrôle sur l'heure d'appel, certains numéros n'étant par exemple autorisés qu'aux heures de bureau et/ou en semaine, et interdits aux autres périodes.

Dans tous les cas, il est prévu une déconnexion automatique de la relation entre appelant et appelé : au bout d'un temps paramétrable, par exemple au bout de trois minutes pour éviter toute prolongation inutile de la communication ; si un temps maximum de communication journalier a été atteint ; et/ou si un nombre maximum d'appels par autorisé est atteint. Cette fonctionnalité est intéressante pour éviter les appels vers des numéros de type "Pages jaunes" qui souvent routent les appels depuis leurs propres lignes avec surfacturation (après avoir informé l'utilisateur).

## Revendications

1. Un procédé de filtrage et de routage d'appels téléphoniques, notamment d'appels à destination de numéros surtaxés, **caractérisé par** les étapes successives suivantes :
a) par un utilisateur (14, 16, 18), envoi à une unité de filtrage et de routage (10) d'une requête d'appel d'un numéro cible, cette requête comprenant un appel téléphonique émis par un numéro d'appelant (NAP) vers un numéro d'appel spécifique associé à un canal entrant (CE) de l'unité de filtrage et de routage et différent du numéro cible ;
b) par l'unité de filtrage et de routage, recherche du numéro d'appelant dans une base de données (20) d'utilisateurs habilités ;
c) si le numéro d'appelant n'est pas répertorié dans la base de données, rejet de la requête d'appel ;
d) si le numéro d'appelant est répertorié dans la base de données :
d1) lecture d'un profil utilisateur associé au numéro d'appelant dans la base de données,
d2) composition conditionnelle du numéro cible sur un canal sortant (CS) de l'unité de filtrage et de routage, en fonction du profil utilisateur, et
d3) mise en relation du canal entrant et du canal sortant, de manière à établir une communication bidirectionnelle entre utilisateur et numéro cible.

2. Le procédé de la revendication 1, comprenant en outre une étape de :
e) enregistrement (112, 124, 230, 322) dans la base de données du numéro d'appelant et d'informations d'horodatage de l'appel.

3. Le procédé de la revendication 1, comprenant en outre une étape de :
f) fermeture inconditionnelle de la communication sur les canaux entrant et sortant à réalisation d'au moins une condition parmi : expiration d'un laps de temps prédéterminé ; temps maximum journalier de communication atteint ; et/ou nombre maximum journalier d'appels autorisé atteint.

4. Le procédé de la revendication 1, dans lequel le profil utilisateur est un profil défini parmi une pluralité de types d'utilisateur correspondant chacun à des modes différents de composition du numéro cible à l'étape d2).

5. Le procédé de la revendication 4, dans lequel ladite pluralité de types d'utilisateur comprend un profil d'utilisateur à composition directe, pour lequel la composition du numéro cible à l'étape d2) est une composition directe (118), par l'unité de filtrage et de routage, d'un numéro unique préenregistré dans la base de données.

6. Le procédé de la revendication 4, dans lequel ladite pluralité de types d'utilisateur comprend un profil d'utilisateur à composition automatique (204, 206), pour lequel la composition du numéro cible à l'étape d2) est une composition indirecte, par l'unité de filtrage et de routage, d'un numéro sélectionné à distance par l'utilisateur via le canal entrant parmi une pluralité de numéros préenregistrés dans la base de données.

7. Le procédé de la revendication 4, dans lequel ladite pluralité de types d'utilisateur comprend un profil d'utilisateur à composition manuelle (202, 206), pour lequel la composition du numéro cible à l'étape d2) est une composition indirecte, par l'unité de filtrage et de routage, d'un numéro composé à distance par l'utilisateur via le canal entrant, le procédé comprenant en outre une étape (220) de vérification du numéro ainsi composé parmi une liste de numéros cibles autorisés, répertoriés dans la base de données.

8. Le procédé de la revendication 1, comprenant en outre l'émission en retour (110, 202, 204, 206, 212, 222, 234, 314), par l'unité de filtrage et de routage, de messages audio vers l'utilisateur via le canal entrant, le contenu de ces messages audio étant fonction de la reconnaissance ou non du numéro d'appel dans la base de données et du profil utilisateur contenu dans celle-ci.

9. Le procédé de la revendication 1, dans lequel le profil utilisateur contenu dans la base de données est un profil variable en fonction du jour et de l'heure de l'appel.

10. Le procédé de la revendication 1, dans lequel l'étape b) de recherche comprend une étape d'identification conditionnelle de l'appelant par demande de code d'accès, en cas de numéro d'appelant inconnu de la base de données ou de numéro masqué non transmis à l'unité de filtrage et de routage.
